(19) 

**Europäisches Patentamt**
**European Patent Office**
**Office européen des brevets**

(11) **EP 4 779 888 A1**

(12) **EUROPEAN PATENT APPLICATION**
published in accordance with Art. 153(4) EPC

(43) Date of publication:
**22.07.2026 Bulletin 2026/30**

(21) Application number: **24865878.3**

(22) Date of filing: **12.09.2024**

(51) International Patent Classification (IPC):
**H04B 7/06** (2006.01) **G06N 3/0455** (2023.01)
**G06N 3/082** (2023.01)

(52) Cooperative Patent Classification (CPC):
**G06N 3/0455; G06N 3/08; G06N 3/082; H04B 7/06**

(86) International application number:
**PCT/KR2024/013915**

(87) International publication number:
**WO 2025/058439 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.09.2023 KR 20230122769**

(71) Applicant: **Samsung Electronics Co., Ltd.**
**Suwon-si, Gyeonggi-do 16677 (KR)**

(72) Inventors:
• **HWANG, Byeonghun**
  **Suwon-si, Gyeonggi-do 16677 (KR)**
• **KIM, Suhwook**
  **Suwon-si, Gyeonggi-do 16677 (KR)**
• **KIM, Wonjun**
  **Suwon-si, Gyeonggi-do 16677 (KR)**
• **BAIK, Jungsuk**
  **Suwon-si, Gyeonggi-do 16677 (KR)**

(74) Representative: **HGF**
**HGF Limited**
**4th Floor, 1 City Square**
**Leeds LS1 2ES (GB)**

(54) **METHOD AND DEVICE FOR PERFORMING WINDOW APPLICATION FOR COMPRESSION OF TEMPORAL-SPATIAL-FREQUENCY CHANNEL STATE INFORMATION IN WIRELESS COMMUNICATION SYSTEM**

(57)    The present disclosure relates to a method and a device for efficiently performing window application for temporal-spatial-frequency (TSF) CSI compression in a wireless communication system. According to an embodiment of the present disclosure, a method performed by a base station in a wireless communication system supporting CSI compression may comprise the steps of: detecting whether performance degradation of an AI/ML model related to TSF CSI compression occurs; when the performance degradation is detected, adjusting a window applied to an AE structure of the AI/ML model related to the TSF CSI compression; and transmitting information about the adjusted window to a UE.

FIG. 7

## Description

[Technical Field]

The disclosure relates to a method and a device for channel state information (CSI) compression in a wireless communication system.

[Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than $100\mu$sec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collison avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

[Detailed Description of the Invention]

[Technical Problem]

The disclosure provides a method and a device for efficiently performing window application for temporal-spatial-frequency (TSF) CSI compression in a wireless communication system.

Furthermore, the disclosure provides a method and a device for performing window application for TSF CSI compression based on the temporal correlation of channels in a wireless communication system.

Furthermore, the disclosure provides a method and a device for actively performing window application for TSF CSI compression at a base station in a wireless communication system.

Furthermore, the disclosure provides a method and a device for actively performing window application for TSF CSI compression at a UE in a wireless communication system.

[Technical Solution]

According to an embodiment of the disclosure, a method performed by a base station in a wireless communication system supporting CSI compression includes detecting whether performance degradation of an artificial intelligence/machine learning (AI/ML) model related to TSF CSI compression has occurred, adjusting a window applied to an auto-encoder (AE) architecture of the AI/ML model related to the TSF CSI compression in case that the performance degradation is detected, and transmitting information about the adjusted window to a user equipment (UE).

In addition, according to an embodiment of the disclosure, a base station in a wireless communication system supporting CSI compression includes a transceiver, and a processor configured to detect whether performance degradation of an AI/ML model related to TSF CSI compression has occurred, adjust a window applied to an AE architecture of the AI/ML model related to the TSF CSI compression in case that the performance degradation is detected, and transmit information about the adjusted window to a UE via the transceiver.

Furthermore, according to an embodiment of the disclosure, a UE in a wireless communication system supporting CSI compression includes a transceiver and a processor configured to: receive, via the transceiver, a request for measurement of temporal correlation of a precoding matrix corresponding to an estimated channel from the base station that has detected occurrence of performance degradation of an AI/ML model related to TSF CSI compression; transmit information about a measured temporal correlation to the base station via the transceiver; and receive information about a window from the base station via the transceiver, the window, which is applied to an AE architecture of the AI/ML model, adjusted based on the measured temporal correlation.

In addition, according to an embodiment of the disclosure, a UE in a wireless communication system supporting CSI compression includes a transceiver, and a processor configured to receive information indicating performance degradation of an AI/ML model related to TSF CSI compression from a base station via the transceiver, adjust a window applied to an AE architecture of the AI/ML model related to the TSF CSI compression, based on the received information, and transmit information about the adjusted window to the base station via the transceiver.

[Brief Description of Drawings]

FIG. 1 illustrates a CSI compression method in which a UE compresses CSI and transmits the CSI to a base station in a wireless communication system;

FIG. 2 illustrates an example of a TSF CSI compression method in which a UE compresses CSI and transmits the CSI to a base station in a wireless communication system according to an embodiment of the disclosure;

FIG. 3 illustrates an example of a TSF CSI compression method in which a UE compresses CSI and transmits the CSI to a base station in a wireless communication system according to an embodiment of the disclosure;

FIG. 4 illustrates an example of a TSF CSI compression method in which a UE compresses CSI and transmits the CSI to a base station in a wireless communication system according to an embodiment of the disclosure;

FIGS. 5A and 5B illustrate a window size applied to an AI/ML model and a temporal correlation according to an embodiment of the disclosure;

FIG. 6 illustrates an example of a configuration method for TSF CSI compression in a wireless communication system according to an embodiment of the disclosure;

FIG. 7 illustrates an example of a window application method for TSF CSI compression in a wireless communication system according to an embodiment of the disclosure;

FIG. 8 illustrates an example of a window application method for TSF CSI compression in a wireless communication system according to an embodiment of the disclosure;

FIG. 9 illustrates an example of a window application method for TSF CSI compression in a wireless communication system according to an embodiment of the disclosure;

FIG. 10 illustrates an example of a structure of an encoder in an AE architecture for TSF CSI compression according to an embodiment of the disclosure; and

FIG. 11 illustrates an example of a structure of a network entity in a wireless communication system according to an embodiment of the disclosure.

[Mode for Carrying out the Invention]

Hereinafter, the operation principle of the disclosure will be described in detail in conjunction with the accompanying drawings. In describing the disclosure below, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. Various embodiments are provided to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in various embodiments of the disclosure, the term "unit" refers to a software element or a hardware element, and the "unit" performs certain functions. However, the "unit" does not always have a meaning limited to software or hardware. The "unit" may be configured to reside in an addressable storage medium or may be configured to reproduce one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

As used herein, each of such phrases as "A and/or B," "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

In embodiments of the disclosure, a user equipment (UE) may be referred to as a terminal, a mobile station (MS), a cellular phone, a smartphone, a computer, or various types of electronic devices capable of performing communication functions. In the following description, a base station is an entity that allocates resources to terminals, and may be at least one of a Node B, an eNode B (eNB), a gNode B (gNB), a wireless access unit, a base station controller, and a node on a network.

Furthermore, the embodiments of the disclosure as described below may also be applied to other communication systems having similar technical backgrounds or channel types to the embodiments of the disclosure. In addition, based on determinations by those skilled in the art, various embodiments of the disclosure may also be applied to other communication systems through some modifications without significantly departing from the scope of the disclosure.

In the detailed description of various embodiments of the disclosure, a communication system may use a wireless communication system, and may use, for example, a 5G communication system on the 5G communication standard (new RAN (NR)) proposed by the 3rd generation partnership project long term evolution (3GPP LTE) that is a wireless communication standardization group. In addition, based on determinations by those skilled in the art, the disclosure may be applied to other communication systems having similar backgrounds or channel types through some modifications without significantly departing from the scope of the disclosure. In the following description, some of terms and names defined in the 3GPP standards may be used for the sake of descriptive convenience. However, the disclosure is not limited by these terms and names, and may be applied in the same way to systems that conform other standards.

Since a 5G communication system must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a higher data rate than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC requires wider coverage than those of other services provided by the 5G communication system because the UEs are likely to be located in a shadow area, such as a basement of a building, which is not covered by the cell due to the nature of the service. The UE supporting mMTC must be configured to be inexpensive, and requires a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10-5 or less. For example, URLLC may be used for services such as remote control for robots or machines, industrial automation, unmanned aerial vehicles, remote health care, and emergency alert.

In order to support the above-described various services, a wireless communication system often needs to support beam management or various frequency bands. In such a communication environment, various channel conditions may occur per frequency band/beam, and significant consumption of radio resources occurs when a UE performs channel estimation and reports channel state information (CSI) to be transmitted as feedback to the base station. In the wireless communication system, so-called "CSI compression" technology in which a UE compresses the CSI and transmits the same to a base station has also begun to be discussed in 3GPP Rel-18, and related technical documents are also being published.

In a wireless communication system, a channel state reconstructed by using a conventional 5G NR codebook-based CSI report may have information loss in a process of transmitting, to a base station, information related to a channel H estimated by a UE, due to a quantization problem of the codebook. Although the codebook may be configured in various ways, the amount of data that the UE needs to transmit to the base station also increases accordingly. For this reason, the CSI compression technology uses a method in which a UE reports/transmits CSI to a base station through auto-encoder (AE)-based CSI compression rather than channel feedback based on a 5G NR codebook), and the base station receives and decodes the CSI is used.

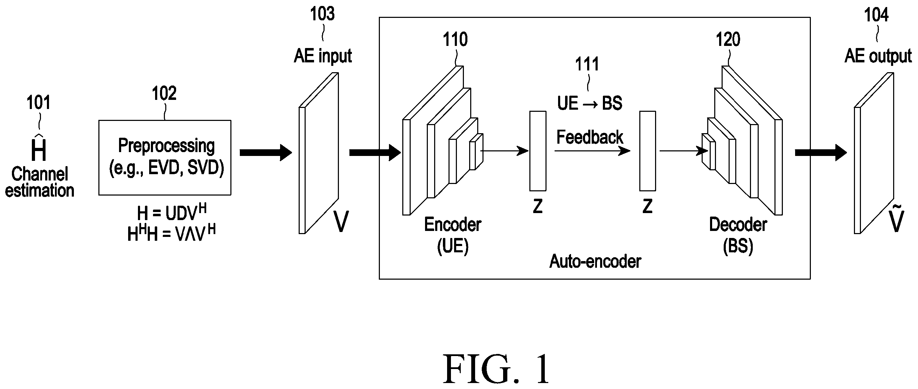

FIG. 1 illustrating a CSI compression method in which a UE compresses CSI and transmits the compressed CSI to a base station in a wireless communication system.

In order for a base station (BS) to know information about a downlink channel estimated by a UE, a separate feedback process in which the UE transmits channel state information (CSI) to the base station is required. Specifically, when the base station transmits, to the UE, a CSI-reference signal (CSI-RS) which is a UE-specific reference signal used by the UE to measure a channel state of the downlink channel, the UE may perform channel estimation on the received CSI-RS, and may obtain information about an estimated channel ($\hat{H}$) 101.

In order to transmit, to the base station, CSI including a precoding matrix indicator (PMI) related to a precoding matrix to be used by the base station during downlink transmission, the UE may perform pre-processing, which uses, for example, an eigenvalue decomposition (EVD) or a singular value decomposition (SVD) of $\hat{H}$ $^H \hat{H}$ (where the superscript H denotes a Hermitian matrix), which are well known in the artificial intelligence (AI)/-machine learning (ML) field, and may then acquire a precoding matrix V corresponding to the estimated channel ($\hat{H}$) from $\hat{H}^H\hat{H} = V\Lambda V^H$. methods, when transmitting the precoding matrix V, the UE transmits an index of a codebook most similar to the precoding matrix V in the form of a PMI, based on a pre-defined codebook disclosed in 3GPP technical specification (TS) 38.214. However, transmitting the index of the codebook in the form of a PMI may results in a difference in representing the actual channel state compared to transmitting the precoding matrix directly, due to the limited granularity of the codebook, and this may result in performance degradation of an MIMO system. In addition, as the performance of MU-MIMO systems improves, the impact of CSI feedback transmitted by each terminal becomes increasingly significant. Consequently, more accurate CSI feedback is required in future communication systems. To this end, a communication system using an existing CSI feedback method may obtain accurate CSI by increasing the number of bits used for CSI reporting. However, as the number of base station antennas, bandwidth, and granularity increase, the signaling overhead for CSI reporting significantly increases. To solve this, in a 3GPP Rel-18 study item (SI), an AI/ML-based CSI compression method is being discussed in which, by using AI/ML, the UE compresses the precoding matrix V corresponding to the estimated channel ($\hat{H}$) 101, and transmits the same to the base station in the form of a feature vector z which is a low-dimensional vector, and the base station reconstructs the original precoding matrix V from the compressed feature vector z.

Referring to FIG. 1, an AI/ML model for CSI compression may be used in both the UE and the base station, and utilizes an auto-encoder (AE) architecture. Specifically, the UE using the AI/ML model performs preprocessing using the eigenvalue decomposition (EVD) or the singular value decomposition (SVD) on the channel ($\hat{H}$) estimated based on the CSI-RS received from the base station (102), and the UE receives the precoding matrix V at an encoder 110 of the AE architecture (103), and outputs a compressed feature vector z. Through this, the UE may feed back the compressed feature vector z corresponding to the estimated channel ($\hat{H}$) to the base station (111). Then, the base station using the AI/ML model receives the compressed feature vector z from the UE at a decoder 120 of the AE architecture, and outputs a reconstructed precoding matrix $\tilde{V}$ (104). For basic descriptions of the AE architecture, reference may be made to the technologies disclosed in RAN#94-e, Rel-18 new study item on "Study on Artificial Intelligence (AI)/Machine Learning (ML) for NR Air Interface."

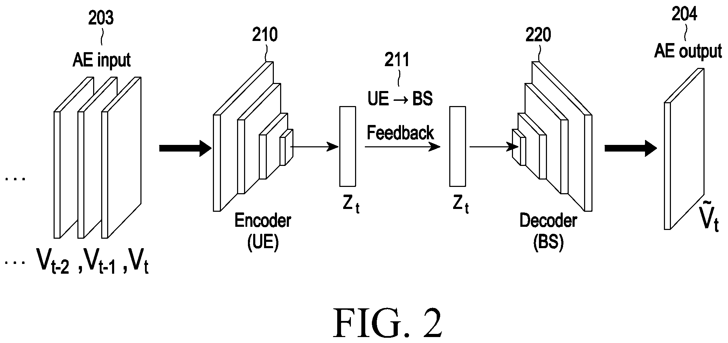

FIG. 2 illustrates an example of a TSF CSI compression method in which a UE compresses CSI and transmits the CSI to a base station in a wireless communication system according to an embodiment of the disclosure.

Referring to FIG. 2, an AI/ML model for CSI compression may be used in both the UE and the base station, and uses an AE architecture. Specifically, the UE using the AI/ML model may perform, in the same manner as the example of FIG. 1, preprocessing using eigenvalue decomposition (EVD) or singular value decomposition (SVD) for a channel ($\hat{H}$) estimated based on a CSI-RS received from the base station. Here, an eigenvector according to the EVD preprocessing denotes a precoding matrix V. A model input of the AI/ML model obtained through SVD preprocessing means a right singular vector. The example of FIG. 2 differs from the example of FIG. 1 in that the UE may receive, at an encoder 210 of an AE architecture, multiple precoding matrices including a precoding matrix $V_t$ for a current time point and at least one precoding matrix $V_{t-1}$, $V_{t-2}$, ... for a past time point (203), and may output one compressed feature vector $z_t$. Therefore, the compressed feature vector $z_t$ may reflect a channel state at a current time point and a channel state at a past time point that has a temporal correlation with the current time point. Through this, the UE may feed back, to the base station, CSI including the compressed feature vector $z_t$ corresponding to the estimated channel ($\hat{H}$) (211). The base station using the AI/ML model receives the compressed feature vector $z_t$ from the UE at a decoder 220 of the AE architecture, and outputs a reconstructed precoding matrix $\tilde{V}_t$ (204). The encoder 210 and the decoder 220 may be implemented by using multiple long short-term memories (LSTMs) for extracting spatial, frequency, and temporal correlations.

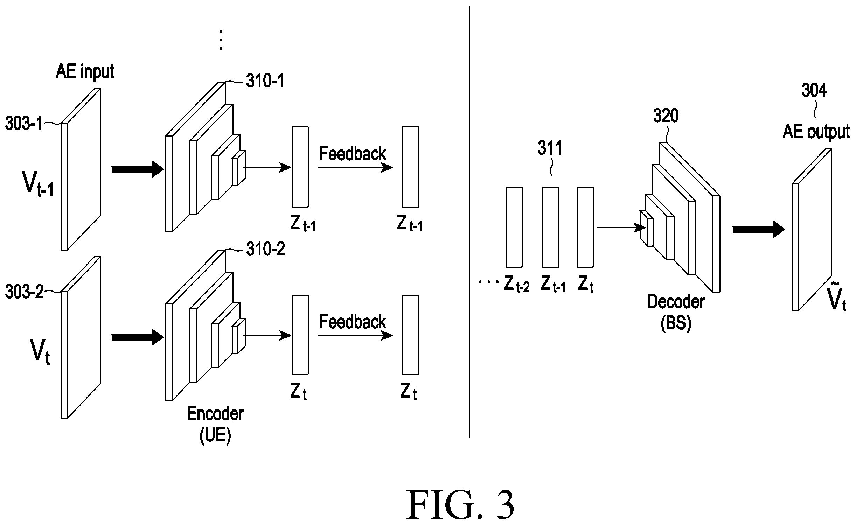

FIG. 3 illustrates an example of a TSF CSI compression method in which a UE compresses CSI and transmits the CSI to a base station in a wireless communication system according to an embodiment of the disclosure.

Referring to FIG. 3, an AI/ML model for CSI compression may be used in both a UE and a base station, and uses an AE architecture. Specifically, the UE using the AI/ML model may perform, in the same manner as in the example of FIG. 1, preprocessing using eigenvalue decomposition (EVD) or singular value decomposition (SVD) for a channel ($\hat{H}$) estimated based on a CSI-RS received from the base station. The difference between the example of FIG. 3 and the example of FIG. 2 is that the UE may receive at least one precoding matrix $V_{t-1}$, $V_{t-2}$, ... for a past time and a precoding matrix $V_t$ for a current time at an encoder 310 of an AE architecture (303-1, 303-2, ...), and may output multiple compressed feature vectors $z_t$, $z_{t-1}$, $z_{t-2}$, ... The UE feeds back, to the base station, CSI including the multiple compressed vectors $z_t$, $z_{t-1}$, $z_{t-2}$, .... The base station using the AI/ML model receives the compressed feature vectors $z_t$, $z_{t-1}$, $z_{t-2}$, ... (311) from the UE at a decoder 320 of the AE architecture, and outputs a reconstructed precoding matrix $\tilde{V}_t$ (304). The encoder 310 and the decoder 320 may be implemented by using multiple LSTMs for spatial, frequency, and temporal correlation extraction.

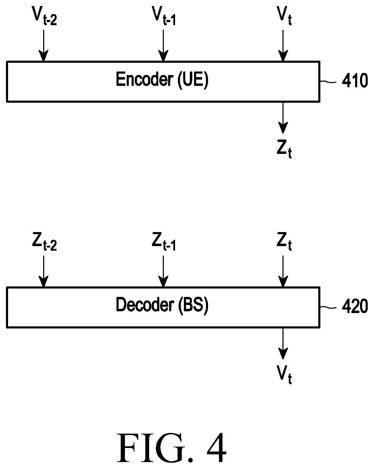

FIG. 4 illustrates an example of a TSF CSI compression method in which a UE compresses CSI and transmits the CSI to a base station in a wireless communication system according to an embodiment of the disclosure.

Referring to FIG. 4, an AI/ML model for CSI compression may be used both in a UE and a base station, and uses an AE architecture. Specifically, the UE using the AI/ML model may perform, in the same manner as in the example of FIG. 1, preprocessing using an eigenvalue decomposition (EVD) or singular value decomposition (SVD) for a channel ($\hat{H}$) estimated based on a CSI-RS received from the base station. The difference between the example of FIG. 4 and the example of FIG. 3 is that the UE may receive at least one precoding matrix $V_{t-1}$, $V_{t-2}$, ... for a past time point as past information at an encoder 410 of an AE architecture, and a precoding matrix $V_t$ for a current time, and output a single compressed feature vector $z_t$. The UE feeds back, to the base station, CSI including the compressed feature vector $z_t$. The base station using the AI/ML model receives, as past information, at least one compressed feature vector $z_{t-1}$, $z_{t-2}$, ... received from the UE at a past time point at a decoder 420 of the AE architecture, receives the compressed feature vector $z_t$ received at a current time point, and outputs a reconstructed precoding matrix $\tilde{V}_t$. The encoder 410 and the decoder 420 may be implemented by using multiple LSTMs for spatial, frequency, and temporal correlation extraction.

The disclosure is based on a temporal-spatial-frequency (TSF) CSI compression method capable of reconstructing a precoding matrix $\tilde{V}_t$ at a current time point t by additionally using the precoding matrices $V_{t-1}$, $V_{t-2}$, ... at past time points t-1, t-2, ... of the precoding matrix v in view of the fact that there is a temporal correlation of the precoding matrix v input to the encoder in the AE architecture, as in the examples of FIGS. 2 to 4. However, the temporal correlation of the channel is not fixed, and the variability of the temporal correlation may increase or decrease, depending on the conditions. Therefore, the window size of a window applied to AI/ML-based TSF CSI compression (hereinafter, simply referred to as a "window") may be configured using a model hyperparameter in an AI/ML model. The window size may be determined as, for example, a value obtained by multiplying the number of the precoding matrices $V_t$, $V_{t-1}$, $V_{t-2}$, ... (which may be referred to as the number of "timesteps") for the current time and at least one past time, given as an input to the encoder of the above-described AE architecture, by the transmission period of the CSI-RS. In addition, the number of pre-coding matrices $V_t$, $V_{t-1}$, $V_{t-2}$, ... (or the number of "timesteps") may be provided from the base station to the UE as an example of the model hyperparameter. In an optional embodiment, it is also possible to directly determine the model hyperparameter for the UE according to the channel state.

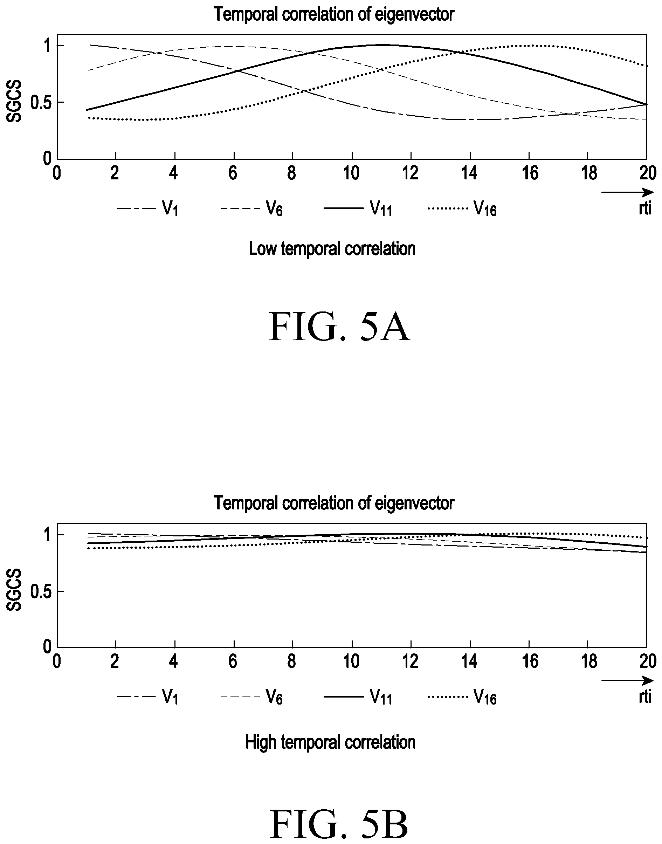

FIG. 5A and FIG. 5B illustrate a window size applied to an AI/ML model and a temporal correlation according to an embodiment of the disclosure.

In FIG. 5A and FIG. 5B, the horizontal axis represents the rti, and the vertical axis represents SGCS. Each of $V_1$, $V_6$, $V_{11}$, $V_{16}$, distinguishably illustrated/exemplified as a dotted-dashed line, a dashed line, a solid line, and dotted line, respectively, denotes a precoding matrix $V_t$. "rti (runtime index)" indicates a time point t, and the SGCS (squared generalized cosine similarity) is used as a temporal correlation metric. An SGCS value closer to 1 indicates a higher temporal correlation. For example, the solid line ($V_{11}$) in FIGS. 5A and 5B represents the SGCS value of a precoding matrix $V_{11}$ according to rti. That is, the value indicated by the solid line when the horizontal axis (rti) is 10 corresponds to SGCS ($V_{11}$, $V_{10}$), and the value indicated by the dashed line ($V_6$) when the horizontal axis (rti) is 9 corresponds to SGCS ($V_6$, $V_9$). For example, the temporal correlation between the precoding matrix $V_{11}$ and the precoding matrix $V_{10}$ may be identified through the SGCS ($V_{11}$, $V_{10}$). FIG. 5A illustrates a case in which the temporal correlation of a channel is low, and FIG. 5B illustrates a case in which the temporal correlation of a channel is high.

As in the examples of FIG. 5A and FIG. 5B, the temporal correlation of a channel may vary depending on the communication environment, and an appropriate window size applicable to an AI/ML model in a UE and a base station supporting a TSF CSI compression method varies according to the temporal correlation of the channel. When the temporal correlation of the channel is low, applying a relatively large-sized window in the UE and the base station may result in the compression/reconstruction of at least one feature vector of a past time point that is unrelated/weakly related to (i.e., has no or low correlation with) a feature vector $V_t$ to be reconstructed, thereby causing performance degradation in the AI/ML model. For example, when the temporal correlation of a channel is low, as in the example of FIG. 5A, applying a large/long window size may result in the compression and reconstruction of channel information unrelated to the precoding matrix $V_t$ to be reconstructed, thereby causing performance degradation. On the other hand, when the temporal correlation of a channel is high, as in the example of FIG. 5B, applying a large/long window size may lead to a larger gain compared to SF CSI compression.

Therefore, in the disclosure, in a TSF CSI compression method, when the temporal correlation of a channel (or the temporal correlation of a precoding matrix corresponding to the channel) is high, the window size may be increased, and when the temporal correlation of the channel is low, the window size may be decreased, thereby increasing the gain, and improving the performance of an AI/ML model to which the TSF CSI compression method is applied. According to the method of the disclosure, it is possible to achieve a larger gain when compared to a spatial-frequency (SF) CSI compression method, among CSI compression methods, which considers only space and frequency.

In the disclosure, an additional procedure is required to design and apply an AI/ML model related to TSF CSI compression by a UE and/or a base station according to the temporal correlation of a channel in a TSF CSI compression method considering time in addition to space and frequency. The disclosure includes a procedure in which a base station and/or a UE configures and changes a window, considering the temporal correlation of a channel. Through this, the performance of reconstructing the precoding matrix $V_t$ may be improved in the TSF CSI compression method compared to the existing SF CSI compression method. To this end, the embodiments of the disclosure propose a signaling procedure between a base station and a UE for parameter configuration in a TSF CSI compression method, a procedure for reporting UE capability information related to temporal correlation (information about a candidate encoder in an AE architecture using TSF CSI compression, information about the temporal correlation of a channel measured by the UE, etc.) from the UE to the base station, a procedure for providing, from the base station to the UE, configuration information related to temporal correlation, a procedure for measuring and transmitting temporal correlation in the event of the performance degradation of an AI/ML model related to TSF CSI compression, and a procedure for window adaptation based on temporal correlation in the base station or the UE. In addition, embodiments of the disclosure applied to the TSF CSI compression method include an embodiment in which the base station actively changes/adjusts and applies a window related to TSF CSI compression, and an embodiment in which the UE actively changes/adjusts and applies a window related to TSF CSI compression. Based on this, the base station and the UE may perform temporal correlation-based window application, thereby expecting an improvement in the CSI reconstruction performance.

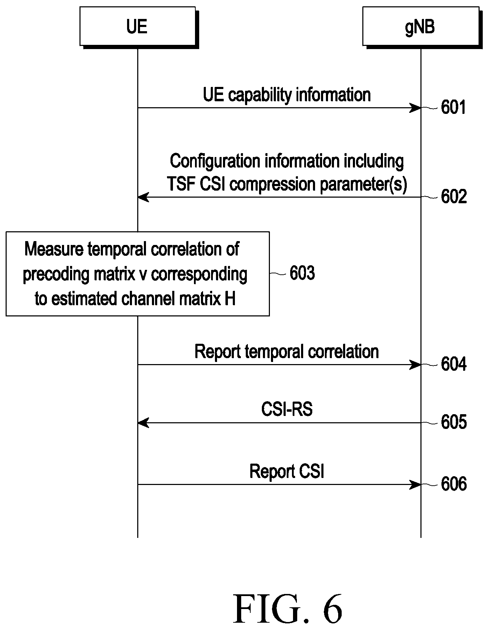

FIG. 6 illustrates an example of a configuration method for TSF CSI compression in a wireless communication system according to an embodiment of the disclosure.

Referring to FIG. 6, in operation 601, a UE transmits, to a base station, UE capability information related to TSF CSI compression. The UE capability information may include information about at least one candidate window of the UE that may be applied to TSF CSI compression in the UE. The information about the candidate window may indicate a window size related to an encoder of an AE architecture, which can be selected by the UE for TSF CSI compression. For example, if the UE supports two encoders capable of supporting 10 and 20 as the numbers of pre-coding matrices $V_t$, $V_{t-1}$, $V_{t-2}$, ... (i.e., window sizes) including a past time point, respectively, the UE may report, to a base station, 10 and 20, which are window sizes, as information about the UE-selectable candidate windows through the UE capability information. According to an optional embodiment, the UE capability information may include at least one of the information about the at least one candidate window, a reference temporal correlation measured in a CSI-RS period of the UE, and a reference temporal correlation measured in a candidate window of the UE.

In operation 602, the base station may transmit configuration information including TSF CSI compression parameter(s) to the UE, based on the UE capability information received from the UE.

The configuration information may include at least one of, for example, information indicating a window to be applied to the UE among the at least one candidate window, window configuration information based on the reference temporal correlation information, window configuration information based on table information defined in the 3GPP standard or pre-defined table information, window configuration information based on mobility of the UE, or information about a period in which the UE measures temporal correlation and transmits the same to the base station. The mobility of a UE may affect the temporal correlation of a channel. For example, in the case of a UE moving at a high speed, the temporal correlation of a channel will be low, and in the case of a UE that is stopped or moving at a low speed, the temporal correlation of a channel will be relatively high. The mobility of the UE may be the mobility of the UE identified in a network or the mobility provided from a third-party entity (e.g., a network server capable of identifying the location or movement state of the UE).

In an optional embodiment, the base station may use an actual precoding matrix (ground truth V) previously reported by the UE as a basis for comparison to determine whether there is performance degradation related to the TSF CSI compression, and in the case where the base station actively changes/adjusts and applies a window related to the TSF CSI compression, the configuration information in the operation 602 may include information about a period in which the UE transmits the actual uncompressed precoding matrix (ground truth V) to the base station, or information about a period in which the UE measures a temporal correlation and transmits the same to the base station.

In addition, in an optional embodiment, when the UE determines whether to report a temporal correlation, the configuration information in operation 602 may include a threshold value for the UE to report the temporal correlation to the base station after monitoring or measuring the temporal correlation (or when an event occurs). The threshold value may be configured using various criteria, such as predetermined table information, a value configured during training of an AI/ML model, a change in the temporal correlation of a channel, the mobility of a UE, and performance degradation of an AI/ML model of a base station.

In operation 603, the UE may measure a temporal correlation of a precoding matrix V corresponding to an estimated channel H. The temporal correlation may include, for example, at least one of a mean value of correlation coefficients of the channel H measured/estimated in a window and a mean value of correlation coefficients of the precoding matrix V measured/estimated in the window, and the measurement of the temporal correlation may use a known measurement method such as cosine similarity measurement, Pearson correlation measurement, and the like. In operation 604, the UE transmits information about the measured temporal correlation to the base station. The transmission of the temporal correlation may be periodically performed or aperiodically performed when an event occurs.

In operation 605, the base station transmits a CSI-RS for channel state measurement to the UE, and in operation 606, the UE measures a channel state based on the CSI-RS, and reports the measured channel state information (CSI) to the base station after compressing the CSI as in the examples of FIGS. 2 to 4. Here, the compressed CSI refers to TSF CSI including a feature vector $z_t$ obtained by compressing a precoding matrix $V_t$ corresponding to an estimated channel ($\hat{H}$) in the TSF dimension, as described in the embodiments of FIGS. 2 to 4.

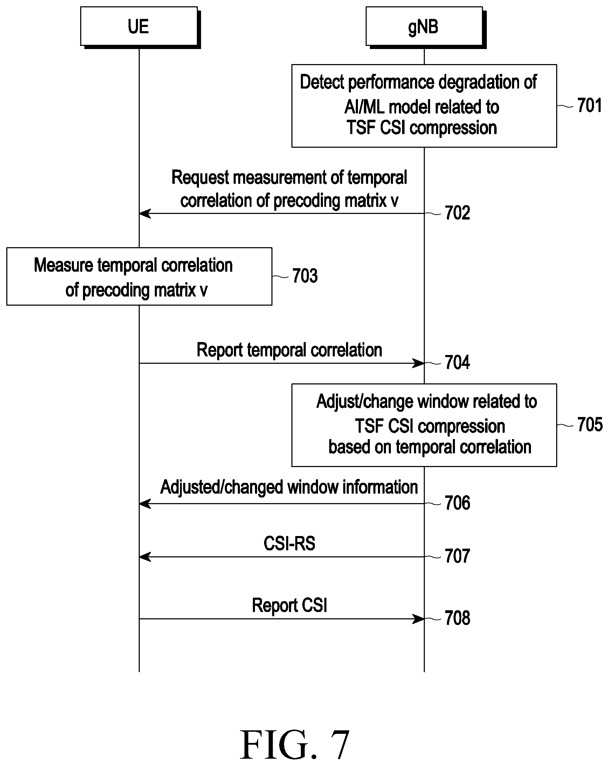

FIG. 7 illustrates an example of a window application method for TSF CSI compression in a wireless communication system according to an embodiment of the disclosure. FIG. 7 illustrates an embodiment in which a base station actively changes/adjusts a window related to TSF CSI compression.

Referring to FIG. 7, in operation 701, a base station may detect/identify whether the performance degradation of an AI/ML model related to TSF CSI compression has occurred. The performance degradation of the AI/ML model may be determined by the base station, and a UE is unable to directly detect the performance degradation. For example, the base station may compare an actual predetermined precoding matrix (ground truth V) previously received from the UE and a precoding matrix $\tilde{V}_t$ reconstructed by the base station according to any one of the methods in FIG. 2 to FIG. 4. When the difference therebetween exceeds a predetermined criterion, the base station may determine that the performance degradation of the AI/ML model has occurred. According to an optional embodiment, when the throughput related to the downlink transmission exceeds a predetermined criterion, the base station may determine that the performance degradation of the AI/ML model has occurred. In this embodiment, it is assumed that the base station has detected performance degradation of the AI/ML model related to TSF CSI compression.

In operation 702, the base station that has detected performance degradation of the AI/ML model requests the UE to measure temporal correlation of a precoding matrix V. The measurement request may be a periodic measurement request or an aperiodic measurement request.

In operation 703, the UE that has received the measurement request may measure a temporal correlation of the precoding matrix V. The measured temporal correlation may include at least one of a mean value of correlation coefficients of a channel H measured /estimated in a window and a mean value of correlation coefficients of the precoding matrix V measured/estimated in the window. The UE may transmit UE capability information to the UE in advance according to the procedure in FIG. 6 for measuring the temporal correlation, and may receive configuration information related to TSF CSI compression from the base station. The transmission of the UE capability information may be optionally performed. In operation 704, the UE transmits/reports information about the measured temporal correlation to the base station. In the disclosure, the reporting of the temporal correlation may be performed periodically or aperiodically.

In operation 705, the base station may adjust/change a window size related to TSF CSI compression, based on the temporal correlation received from the UE. Such adjustment/change of the window size will be referred to as window adaptation. For example, the base station may compare a temporal correlation received from the UE at a previous time point with a temporal correlation received from the UE at a current time point, identify whether the temporal correlation has decreased or increased, and, when the temporal correlation of the channel has decreased, decrease the window size related to TSF CSI compression, and conversely, when the temporal correlation of the channel has increased, increase the window size related to TSF CSI compression. The base station may adjust/change the window size related to TSF CSI compression to minimize performance degradation of the AI/ML model by comparing the loss of the precoding matrix $\tilde{V}_c$ reconstructed by the base station's decoder according to the following [Mathematical Expression 1] and the actual precoding matrix (ground truth V).

[Mathematical Expression 1]

$$\arg\min_{C} L\ (V, \widetilde{V}_c)$$

In operation 706, the base station transmits the adjusted/changed window information to the UE. The adjusted/changed window information may include information indicating the adjusted/changed window size. The information indicating the adjusted/changed window size may be information directly indicating the adjusted/changed window size, or information for stepwise increasing or decreasing the window size.

In operation 707, the base station transmits a CSI-RS for channel state measurement to the UE, and in operation 708, the UE measures a channel state based on the CSI-RS, and reports the measured channel state information (CSI) to the base station after compressing the CSI, as in the examples of FIGS. 2 to 4. Here, the compressed CSI refers to temporal-spatial-frequency (TSF) CSI that includes a feature vector $z_t$ obtained by compressing, in the TSF dimension, a precoding matrix $V_t$ corresponding to an estimated channel (H), as described in the above embodiments of FIGS. 2 to 4.

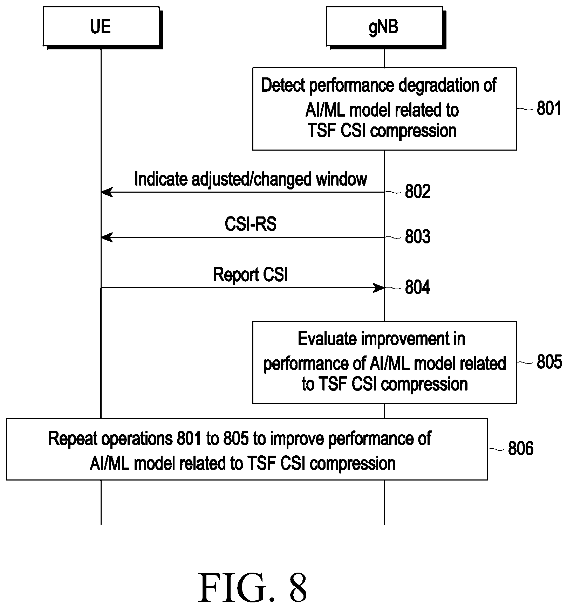

FIG. 8 illustrates an example of a window application method for TSF CSI compression in a wireless communication system according to an embodiment of the disclosure. FIG. 8 illustrates an example in which a base station actively changes/adjusts a window related to TSF CSI compression. A difference compared to the example of FIG. 7 is that, in the example of FIG. 8, the base station may adjust/change the window size for TSF CSI compression without a temporal correlation report from a UE.

Referring to FIG. 8, in operation 801, a base station may detect performance degradation of an AI/ML model related to TSF CSI compression. The performance degradation of the AI/ML model may be determined by the base station, and a UE may not directly detect the performance degradation. For example, the base station may compare a predetermined precoding matrix (ground truth V) previously received from the UE and a precoding matrix $\tilde{V}_t$ reconstructed by the base station according to any one of the methods of FIGS. 2 to 4, and when the difference therebetween exceeds a predetermined criterion, the base station may determine that performance degradation of the AI/ML model has occurred. According to an optional embodiment, when the throughput related to downlink transmission exceeds a predetermined criterion, the base station may determine that the performance degradation of the AI/ML model has occurred. In this embodiment, it is assumed that the base station has detected the performance degradation of the AI/ML model related to TSF CSI compression.

In operation 802, the base station that has detected the performance degradation of the AI/ML model may adjust/change (i.e., perform window adaption) the size of a window related to TSF CSI compression. In this embodiment, since the base station does not receive information about a temporal correlation from the UE, the base station may first provide the UE with window information adjusted/changed by increasing the size of the window. Subsequently, the base station may increase or decrease the window size by identifying an increase or a decrease in the performance of the AI/ML model according to the result of the window application. According to an optional embodiment, the base station, which has detected the performance degradation of the AI/ML model, may increase or decrease the size of the window, based on the mobility of the UE. The information indicating the adjusted/changed window size may be information directly indicating the adjusted/changed window size, or may be information for stepwise increasing or decreasing the window size.

In operation 803, the base station transmits a CSI-RS for channel state measurement to the UE, and in operation 7804, the UE measures a channel state based on the CSI-RS, and reports the measured channel state information (CSI) to the base station after compressing the CSI, as in the examples of FIGS. 2 to 4. Here, the compressed CSI refers to TSF CSI including a feature vector $z_t$ obtained by compressing a precoding matrix $V_t$ corresponding to an estimated channel ($\acute{H}$) in the TSF dimension, as described in the examples of FIG. 2 to FIG. 4. In operation 805, the base station evaluates an increase or decrease in the performance of the AI/ML model according to the result of the window application indicated in operation 802, and in operation 806, the base station performs window application related to TSF CSI compression by repeating, based on the evaluation result, operations 802 to 804 in order to improve the performance of the AI/ML model to, for example, a predetermined level. When compared to the embodiment of FIG. 7, the embodiment of FIG. 8 may reduce a load and signaling overhead related to TSF CSI compression at the UE side.

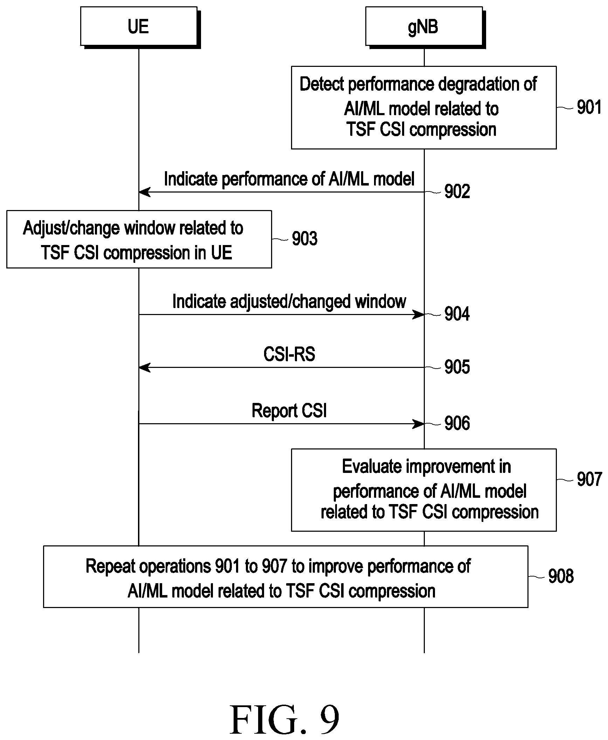

FIG. 9 illustrates an example of a window application method for TSF CSI compression in a wireless communication system according to an embodiment of the disclosure. FIG. 9 illustrates an example in which a UE actively changes/adjusts a window related to TSF CSI compression.

Referring to FIG. 9, in operation 901, a base station may detect performance degradation of an AI/ML model related to TSF CSI compression. The performance degradation of the AI/ML model may be determined by the base station, and the UE may not directly detect the performance degradation. For example, the base station may compare a predetermined precoding matrix (ground truth V) previously received from the UE and a precoding matrix $\hat{V}_t$ reconstructed by the base station according to any one of the methods in FIG. 2 to FIG. 4, and when the difference therebetween exceeds a predetermined criterion, the base station may determine that performance degradation of the AI/ML model has occurred. According to an optional embodiment, when the throughput related to a downlink transmission exceeds a predetermined criterion, the base station may determine that performance degradation of the AI/ML model has occurred. In this embodiment, it is assumed that the base station has detected performance degradation of the AI/ML model related to TSF CSI compression.

In operation 902, the base station that has detected performance degradation of the AI/ML model transmits, to the UE, information indicating the performance degradation of the AI/ML model.

In operation 903, the UE that has identified the performance degradation of the AI/ML model may adjust or change the size of a window related to TSF CSI compression (that is, window adaptation). In this embodiment, the UE may determine an increase or a decrease in the performance of the AI/ML model by directly increasing or decreasing the size of the window. For example, in this embodiment, the UE may use a reference decoder according to an AE architecture to compare the loss between a precoding matrix $\tilde{V}_c$ reconstructed by the reference decoder according to [Mathematical Expression 1] and an actual precoding matrix (ground truth V), and adjust/change the size of the window related to TSF CSI compression to minimize the performance degradation of the AI/ML model.

Subsequently, in operation 904, the UE transmits the adjusted/changed window information to the base station. The adjusted/changed window information may include information indicating the adjusted/changed window size. The information indicating the adjusted/changed window size may be information directly indicating the adjusted/changed window size, or information for stepwise increasing or decreasing the window size. The adjusted/changed window information may be applied to the AI/ML model of the base station.

In operation 905, the base station transmits a CSI-RS for channel state measurement to the UE, and in operation 906, the UE measures a channel state based on the CSI-RS, and reports the measured channel state information (CSI) to the base station after compressing the CSI, as in the examples of FIG. 2 to FIG. 4. Here, the compressed CSI refers to temporal-spatial-frequency (TSF) CSI, which includes a feature vector $z_t$ obtained by compressing a precoding matrix $V_t$ corresponding to an estimated channel ($\acute{H}$) in the TSF dimension, as described in the embodiments in FIGS. 2 to 4.

Subsequently, in operation 907, the base station evaluates an increase or a decrease in the performance of the AI/ML model, based on the result of the window application in operation 904, and in operation 908, the base station repeats operations 901 to 908 to improve the performance of the AI/ML model, based on the evaluation result. When compared to the embodiment of FIG. 7, the embodiment of FIG. 9 does not require signaling for transmitting and receiving temporal correlation information to and from the UE.

The above-described embodiments in FIGS. 6 to 9 may be implemented individually or in combination of two or more embodiments.

For example, the embodiment of FIG. 7, in which a base station actively changes/adjusts a window related to TSF CSI compression in a network, is performed as the basic operation in the network. However, depending on the UE category (performance), a low-performance UE may operate according to the embodiment of FIG. 8, and a high-performance UE may operate according to the embodiment of FIG. 9, in which the UE actively changes/adjusts a window related to TSF CSI compression. In an optional embodiment, depending on the resource allocation status of each UE, the battery state of each UE, and whether each UE is operating in power saving mode, an operation in which the base station actively changes/adjusts the window related to TSF CSI compression may be performed when resources allocated to the UE are insufficient, the battery is in a low state, or the UE is operating in a power saving mode. Conversely, when resources allocated to the UE are sufficient, or the battery is in a high state, or the UE is operating in a non-power-saving mode, an operation in which the UE actively changes/adjusts the window related to TSF CSI compression may be performed. In an optional embodiment, the base station may provide information indicating which of the base station or the UE actively changes/adjusts the window related to TSF CSI compression, so that the base station or the UE may optionally change/adjust the window related to TSF CSI compression.

According to the above-described embodiments of the disclosure, a window applied to TSF CSI compression may be appropriately adjusted or changed by a base station or a UE as the temporal correlation of a channel changes, thereby improving the gain of TSF CSI compression compared to the existing SF CSI compression method.

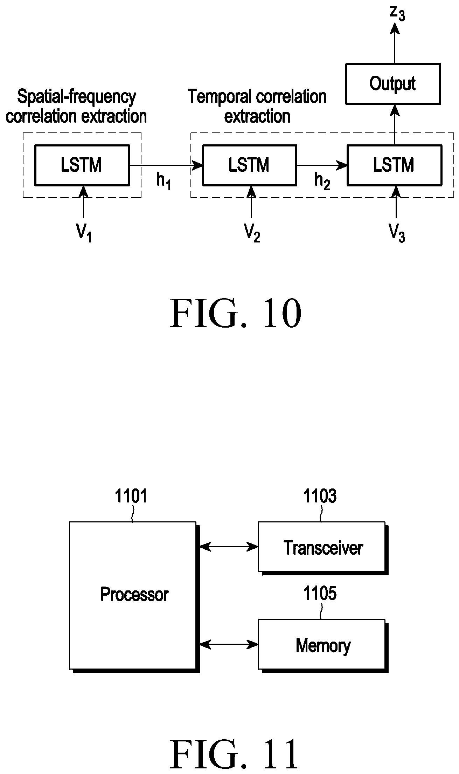

FIG. 10 illustrates an example of a configuration of an encoder in an AE architecture for TSF CSI compression according to an embodiment of the disclosure. An encoder in FIG. 10 may be implemented to include multiple long short-term memories (LSTMs) for correlation extraction in the spatial, frequency, and temporal domains. The example of FIG. 10 illustrates, for the sake of descriptive convenience, an architecture in which precoding matrices $V_1$, $V_2$, and $V_3$ for three time points, including a past time point, is input and a compressed feature vector $z_3$ is output . H1 and h2 are correlation information in the time domain, extracted from the past time point. Here, h denotes a hidden state, and a hidden state extracted from an input of the past time point may be transferred to the next time point, allowing temporal correlation information to be used. A decoder in the AE architecture for TSF CSI compression may be implemented in a mirrored form corresponding to the encoder in FIG. 10.

FIG. 11 illustrates an example of a structure of a network entity in a wireless communication system according to an embodiment of the disclosure.

The network entity in FIG. 11 may be at least one of the UE and the base station described in the embodiments of FIGS. 1 to 10. The network entity in FIG. 11 may include a processor 1101, a transceiver 1103, and memory 1105. The processor 1101, the transceiver 1103, and the memory 1105 of the network entity may be operated according to the above-described communication methods described in the embodiments of FIGS. 1 to 10. However, components of the network entity are not limited to the above-described example. For example, the network entity may include a larger or smaller number of components than the above-described components. In addition, the processor 1101, the transceiver 1103, and the memory 1105 may be implemented in the form of a single chip.

The transceiver 1103 refers to a network entity receiver and a network entity transmitter as a whole, and may transmit/receive signals with counterpart network entities. The transmitted/received signals may include at least one of control information and data. The transceiver 1103 may receive signals, output the same to the processor 1101, and transmit signals output from the processor 1101. Aldo, the transceiver 1101 may include an RF transmitter configured to up-convert and amplify the frequency of transmitted signals, and an RF receiver configured to low-noise-amplify received signals and down-convert the frequency thereof. Furthermore, the transceiver 1103 may receive communication signals, output the same to the processor 1101, and transmit signals output from the processor 1101 to counterpart network entities through a network. The memory 1105 may store programs and data necessary for the operations of the network entity according to at least one of the embodiments of FIGS. 1 to 10. In addition, the memory 1105 may store control information or data included in signals transmitted/received by the network entity. The memory 1105 may include storage media such as a ROM, a RAM, a hard disk, a CD-ROM, and a DVD, or a combination of storage media.

The processor 1101 may control a series of processes so that the network entity can operate according to at least one of the embodiments of FIGS. 1 to 10. The processor 1101 may include at least one processor. Methods disclosed in the claims or methods according to the embodiments described in the specification of the disclosure may be implemented by hardware, software, or a combination of hardware and software. When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form memory in which the program is stored. In addition, a plurality of such memories may be included in the electronic device. Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a base station in a wireless communication system supporting channel state information (CSI) compression, the method comprising:

    detecting whether performance degradation of an artificial intelligence/machine learning (AI/ML) model related to temporal-spatial-frequency (TSF) CSI compression occurs;
    in case that the performance degradation is detected, adjusting a window applied to an auto-encoder (AE) architecture of the AI/ML model related to the TSF CSI compression; and
    transmitting information about the adjusted window to a user equipment (UE).

2. The method of claim 1, further comprising:

    in case that the performance degradation is detected, requesting the UE to measure a temporal correlation of a precoding matrix corresponding to an estimated channel; and
    receiving information about the temporal correlation from the UE.

3. The method of claim 2, wherein adjusting a window further comprises, adjusting the window applied to the AE architecture of the AI/ML model related to the TSF CSI compression, based on the information about the temporal correlation.

**4.** The method of claim 2, further comprising transmitting, to the UE, configuration information for measuring a temporal correlation by the UE, wherein the information about the temporal correlation comprises at least one of a mean value of correlation coefficients of a channel measured within the window and a mean value of correlation coefficients of a precoding matrix measured within the window.

**5.** The method of claim 1, further comprising:

based on the adjusted window, evaluating the performance of the AI/ML model related to the TSF CSI compression; and
repeating the adjusting of the window until the performance of the AI/ML model reaches a predetermined level.

**6.** A base station in a wireless communication system supporting channel state information (CSI) compression, the base station comprising:

a transceiver; and
a processor configured to
detect whether performance degradation of an artificial intelligence/machine learning (AI/ML) model related to temporal-spatial-frequency (TSF) CSI compression occurs,
in case that the performance degradation is detected, adjust a window applied to an auto-encoder (AE) architecture of the AI/ML model related to the TSF CSI compression, and transmit information about the adjusted window to a user equipment (UE) via the transceiver.

**7.** The base station of claim 6, wherein the processor is further configured to:

in case that the performance degradation is detected, request the UE via the transceiver to measure a temporal correlation of a precoding matrix corresponding to an estimated channel; and
receive information about the temporal correlation from the UE via the transceiver.

**8.** The base station of claim 7, wherein the processor is further configured to adjust the window applied to the AE architecture of the AI/ML model related to the TSF CSI compression, based on the information about the temporal correlation.

**9.** The base station of claim 7, wherein the processor is further configured to transmit, to the UE via the transceiver, configuration information for measuring a temporal correlation by the UE, wherein the information about the temporal correlation comprises at least one of a mean value of correlation coefficients of a channel measured within the window and a mean value of correlation coefficients of a precoding matrix measured within the window.

**10.** The base station of claim 6, wherein the processor is further configured to:

based on the adjusted window, evaluate the performance of the AI/ML model related to the TSF CSI compression; and
repeat the adjusting of the window until the performance of the AI/ML model reaches a predetermined level.

**11.** A user equipment (UE) in a wireless communication system supporting channel state information (CSI) compression, the UE comprising:

a transceiver; and
a processor configured to
receive, via the transceiver, a request for measurement of a temporal correlation of a precoding matrix corresponding to an estimated channel from a base station that detects performance degradation of an artificial intelligence/machine learning (AI/ML) model related to temporal-spatial-frequency (TSF) CSI compression,
transmit information about a measured temporal correlation to the base station via the transceiver, and
receive, from the base station via the transceiver, information about a window, which is applied to the AE (auto-encoder) architecture of the AI/ML model, adjusted based on the measured temporal correlation.

**12.** The UE of claim 11, wherein the information about the temporal correlation comprises at least one of a mean value of correlation coefficients of a channel measured within the window and a mean value of correlation coefficients of a precoding matrix measured within the window.

**13.** The UE of claim 11, wherein the processor is configured to:

transmit, to the UE via the transceiver, UE capability information comprising information about at least one candidate window of the UE that is appliable to the TSF CSI compression by the UE, and
based on the UE capability information, receive, via the transceiver, configuration information for reporting the measurement of the temporal correlation.

**14.** A user equipment (UE) in a wireless communication system supporting channel state information (CSI) compression, the UE comprising:

a transceiver; and
a processor configured to
receive, from a base station via the transceiver, information indicating performance degradation of an artificial intelligence/machine learning (AI/ML) model related to temporal-spatial-frequency (TSF) CSI compression,
based on the received information, adjust a window applied to an auto-encoder (AE) architecture of the AI/ML model related to the TSF CSI compression, and
transmit information about the adjusted window to the base station via the transceiver.

**15.** The UE of claim 14, wherein the processor is further configured to compare loss between a precoding matrix reconstructed by the reference decoder and an actual precoding matrix by using a reference decoder according to the AE architecture, and to adjust a size of the window related to the TSF CSI compression to minimize the performance degradation of the AI/ML model.

FIG. 1

FIG. 2

FIG. 3

$V_{t-2}$        $V_{t-1}$        $V_t$

| Encoder (UE) |
|:---:|

~ 410

$Z_t$

$Z_{t-2}$        $Z_{t-1}$        $Z_t$

| Decoder (BS) |
|:---:|

~ 420

$V_t$

# FIG. 4

**Temporal correlation of eigenvector**

Low temporal correlation

## FIG. 5A

**Temporal correlation of eigenvector**

High temporal correlation

## FIG. 5B

UE        gNB

UE capability information — 601

Configuration information including
TSF CSI compression parameter(s) — 602

Measure temporal correlation of
precoding matrix v corresponding — 603
to estimated channel matrix H

Report temporal correlation — 604

CSI-RS — 605

Report CSI — 606

FIG. 6

| UE | | gNB |
|---|---|---|

Detect performance degradation of AI/ML model related to TSF CSI compression — 701

Request measurement of temporal correlation of precoding matrix v — 702

Measure temporal correlation of precoding matrix v — 703

Report temporal correlation — 704

Adjust/change window related to TSF CSI compression based on temporal correlation — 705

Adjusted/changed window information — 706

CSI-RS — 707

Report CSI — 708

# FIG. 7

EP 4 779 888 A1

| UE | | gNB |
|---|---|---|

**Detect performance degradation of AI/ML model related to TSF CSI compression** — 801

Indicate adjusted/changed window — 802

CSI-RS — 803

Report CSI — 804

**Evaluate improvement in performance of AI/ML model related to TSF CSI compression** — 805

**Repeat operations 801 to 805 to improve performance of AI/ML model related to TSF CSI compression** — 806

## FIG. 8

22

UE

gNB

Detect performance degradation of AI/ML model related to TSF CSI compression ~ 901

Indicate performance of AI/ML model ~ 902

Adjust/change window related to TSF CSI compression in UE ~ 903

Indicate adjusted/changed window ~ 904

CSI-RS ~ 905

Report CSI ~ 906

Evaluate improvement in performance of AI/ML model related to TSF CSI compression ~ 907

Repeat operations 901 to 907 to improve performance of AI/ML model related to TSF CSI compression ~ 908

FIG. 9

Spatial-frequency
correlation extraction

Temporal correlation
extraction

$z_3$

Output

LSTM $\quad h_1 \quad$ LSTM $\quad h_2 \quad$ LSTM

$V_1$ $\qquad$ $V_2$ $\qquad$ $V_3$

FIG. 10

1101 $\qquad$ 1103

Processor $\longleftrightarrow$ Transceiver

1105

Memory

FIG. 11

## INTERNATIONAL SEARCH REPORT

| International application No. |
| --- |
| **PCT/KR2024/013915** |

**A. CLASSIFICATION OF SUBJECT MATTER**

**H04B 7/06**(2006.01)i; **G06N 3/0455**(2023.01)i; **G06N 3/082**(2023.01)i

According to International Patent Classification (IPC) or to both national classification and IPC

**B. FIELDS SEARCHED**

Minimum documentation searched (classification system followed by classification symbols)

H04B 7/06(2006.01); H03M 7/30(2006.01); H04B 17/24(2015.01); H04B 7/0452(2017.01); H04L 25/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TSF CSI 압축(TSF CSI encoding), AI/ML 모델(AI/ML model), 성능 열화 (performance deterioration), AE, 윈도우(window), 조정(adjustment)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | LENOVO. Further aspects of AI/ML for CSI feedback. R1-2303525, 3GPP TSG RAN WG1 #112bis-e, e-Meeting. 07 April 2023.<br>See pages 8-9. | 1,6,14<br>2-5,7-13,15 |
| Y | WO 2022-222089 A1 (QUALCOMM INCORPORATED) 27 October 2022 (2022-10-27)<br>See paragraphs [0225]-[0229]; claim 5; and figure 16. | 1,6,14 |
| A | US 2022-0376749 A1 (TELEFONAKTIEBOLAGET LM ERICSSON (PUBL)) 24 November 2022 (2022-11-24)<br>See paragraphs [0123]-[0141]; and figures 3-4. | 1-15 |
| A | WO 2022-227081 A1 (QUALCOMM INCORPORATED) 03 November 2022 (2022-11-03)<br>See paragraphs [0197]-[0199]; and figure 15. | 1-15 |
| A | WO 2022-257157 A1 (HUAWEI TECHNOLOGIES CO., LTD.) 15 December 2022 (2022-12-15)<br>See paragraphs [0176]-[0187]; and figure 15. | 1-15 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 December 2024** | **16 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/013915**

| Patent document cited in search report | | | Publication date (day/month/year) | Patent family member(s) | | | Publication date (day/month/year) |
|---|---|---|---|---|---|---|---|
| WO | 2022-222089 | A1 | 27 October 2022 | CN | 117178502 | A | 05 December 2023 |
| | | | | EP | 4327485 | A1 | 28 February 2024 |
| | | | | US | 2024-0129759 | A1 | 18 April 2024 |
| US | 2022-0376749 | A1 | 24 November 2022 | EP | 3935742 | A1 | 12 January 2022 |
| | | | | EP | 3935742 | A4 | 19 October 2022 |
| | | | | US | 11509363 | B2 | 22 November 2022 |
| | | | | US | 11728851 | B2 | 15 August 2023 |
| | | | | US | 2022-0149904 | A1 | 12 May 2022 |
| | | | | WO | 2020-180221 | A1 | 10 September 2020 |
| WO | 2022-227081 | A1 | 03 November 2022 | CN | 117223230 | A | 12 December 2023 |
| | | | | EP | 4331129 | A1 | 06 March 2024 |
| | | | | US | 2024-0313838 | A1 | 19 September 2024 |
| WO | 2022-257157 | A1 | 15 December 2022 | CN | 117413496 | A | 16 January 2024 |
| | | | | EP | 4342143 | A1 | 27 March 2024 |
| | | | | EP | 4342143 | A4 | 10 July 2024 |
| | | | | US | 2024-0106508 | A1 | 28 March 2024 |

Form PCT/ISA/210 (patent family annex) (July 2022)